# EUROPÄISCHE PATENTSCHRIFT

(11) **EP 1 427 504 B1**
(45) Veröffentlichungstag und Bekanntmachung des Hinweises auf die Patenterteilung: **27.12.2006**
(21) Anmeldenummer: 02798647.0
(22) Anmeldetag: 12.09.2002
(51) Int. Cl.: B01D 29/11, B01D 29/52, B01D 29/90

(54) **EINLAUFVERTEILER FÜR ANSCHWEMMFILTER**
INLET DISTRIBUTOR FOR PRECOAT FILTERS
DISTRIBUTEUR D'ENTREE POUR FILTRE A PRECOUCHE

(30) Priorität: 17.09.2001 DE 20115324 U
(43) Veröffentlichungstag der Anmeldung: 16.06.2004
(73) Patentinhaber: KRONES Aktiengesellschaft, 93073 Neutraubling (DE)
(72) Erfinder: BANKE, Friedrich, 84416 Inning am Holz (DE); KAIN, Josef, 85417 Marzling (DE); HAHN, Adolf, 92726 Waidhaus (DE); FLOSSMANN, Rudolf, 85416 Langenbach (DE)
(74) Vertreter: Grünecker, Kinkeldey, Stockmair & Schwanhäusser Anwaltssozietät
(86) Internationale Anmeldenummer: PCT/EP2002/010257
(87) Internationale Veröffentlichungsnummer: WO 2003/024563

(56) Entgegenhaltungen:
- WO-A-96/14129
- FR-A- 2 562 441
- US-A- 3 429 443
- US-A- 4 179 381

## Beschreibung

Die Erfindung betrifft einen Anschwemmfilter zur Filtration von Fluiden, insbesondere von Bier, gemäß dem Oberbegriff des Anspruchs 1, sowie die Verwendung eines Einlaufverteilers für einen Filterkessel gemäß Anspruch 11.

Ein solcher Anschwemmfilter b.z.w Einlauf verteiler ist aus der WO 96/14129 bekannt. Bei dem bekannten Einlaufverteiler wird Unfiltrat ringförmig nach unten geleitet

(Aus der US-A-1 771 928 zeigt ebenfalls bereits einen Anschwemmfilter)

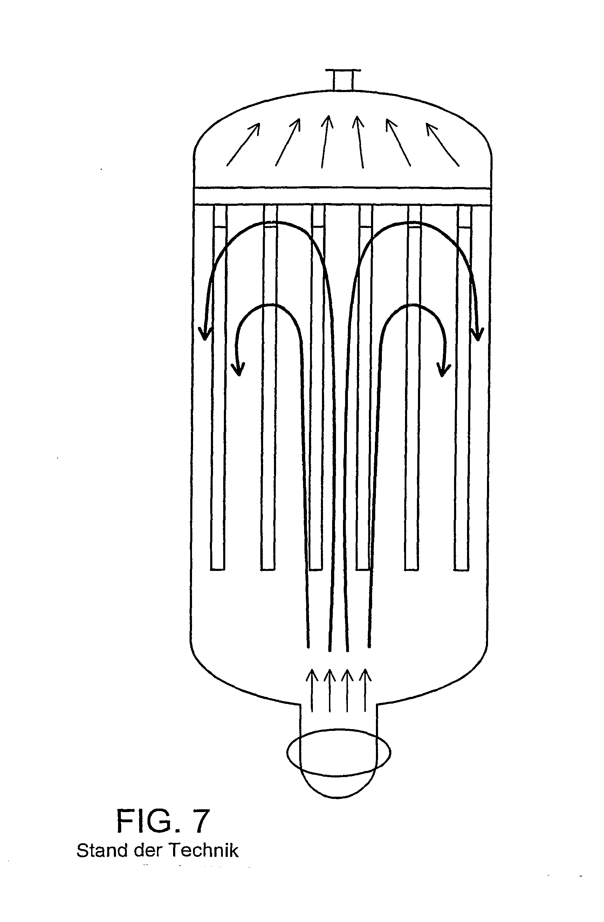

Bei der Filtration von Bier werden derzeit insbesondere Anschwemmfilter verwendet, wie beispielsweise in Fig. 7 gezeigt. Auf Grund der Bauart der üblichen Kerzenfilter mit einer oberen Lochplatte, an der die Kerzen befestigt sind, sinkt die mittlere vertikale Strömungsgeschwindigkeit linear Ober die Länge der offenen Filterfläche auf Null ab. Es kommt zu einer ungleichmäßigen Anströmung der Filterkerzen und somit zu einer ungleichmäßigen Anlagerung von Filterhilfsmittel an den Filterkerzen. Um das Problem der inhomogenen Partikelverteilung Ober die Höhe des Behälters zu kompensieren, sind alle Einlaufsysteme für Filterbehälter so konstruiert, dass lokal hohe Geschwindigkeiten im Behälter entstehen, die für den erforderlichen Transport sorgen, und sogenannte vagabundierende Strömungen erzeugen. Diese hohen Transportgeschwindigkeiten bringen jedoch insbesondere beim Medienwechsel, d. h. wenn z. B. ein Vormedium (z. B. Bier) im Filterkessel durch ein Nachmedium (z. B. Wasser) ausgetauscht werden soll, den Nachteil mit sich, dass es zu hohen Verschnittmengen kommt, da keine gleichmäßige Strömung mehr gewährleistet ist, wodurch es zu einer Vermischung der beiden Medien kommt. Dem wird entweder durch eine Reduzierung der Strömungsgeschwindigkeit beim Medienwechsel Rechnung getragen, was allerdings wiederum die Rüstzeit erhöht, oder es wird die Vermischung der beiden Medien in Kauf genommen und die Verschnittmenge in einem Puffertank zwischengelagert und dann dem Unfiltrat später wieder beigemischt

Hiervon ausgehend liegt der vorliegenden Erfindung die Aufgabe zu Grunde, einen Anschwemmfilter bzw. einen Einlaufverteiler bereitzustellen, die eine gleichmäßigere Anschwemmung ermöglichen und beim Medienwechsel gleichzeitig die Verschnittmenge reduzieren können.

Erfindungsgemäß wird diese Aufgabe durch die Merkmale der Ansprüche 1 und 11 gelöst.

Der erfindungsgemäße Einlaufverteiler bewirkt durch seine Konstruktion eine Reduzierung der lokalen Einlaufgeschwindigkeit im Unfiltratbereich des Filters. Durch die große Reduzierung der Geschwindigkeit und die Umlenkung der Strömung in die Horizontale wird im Filterkessel eine nahezu ideale "Kolbenströmung" erzeugt, die ein ideales Verdrängen von verschiedenen Medien mit geringster Vermischung ermöglicht. Der umlaufende sich stetig erweiternde Ringspalt bewirkt eine ringförmige Diffusorwirkung auf die Strömung. Durch diese Reduzierung der Strömung wird der Stoßimpuls beim Einströmen auf die Flüssigkeit im Kessel auf ein Minimum reduziert.

Gemäß einem bevorzugten Ausführungsbeispiel ist der Einlaufirerteifer aus zwei Tellern gebildet, die derart ausgebildet und zusammengefügt sind, dass dazwischen der umlaufende Ringspalt entsteht. Ein derartiger Einlaufverteiler ist einfach und kostengünstig zu fertigen.

Der Öffnungswinkel des Ringspalts liegt zwischen 10° und 30°, vorzugsweise bei 15°. Der Abstand zwischen den beiden Tellern ist verstellbar und kann an unterschiedliche Prozesse angepasst werden. Der Durchmesser des Einlaufverteilers wird so gewählt, daß die Austrittsgeschwindigkeit kleiner 1 m/s beträgt.

Aufgrund der Einbindung und Aufstellung des Filters erfolgt der Zulauf in der Regel seitlich über einen oder mehrere Rohrbögen. Ein solcher Rohrbogen bringt jedoch das Problem mit sich, dass es zu einem ungleichmäßigen Geschwindigkeitsprofil der Strömung im Rohrbogen kommt. Dies jedoch wiederum beeinträchtigt eine rotationssymetrische Strömung im Filterkessel. Um jedoch eine rotationssymetrische Strömung zu gewährleisten kann nach dem Rohrbogen ein gerades Rohr als Beruhigungsstrecke angeordnet werden. Es kann auch unmittelbar vor dem Einlaufverteiler in dem Einlaufrohr ein Strömungsgleichrichter angeordnet werden. Ebenso können im Rohrbogen des Zulaufrohrs Gleichrichterbleche angeordnet werden.

Gemäß einer bevorzugten Ausführungsform weist der Anschwemmfilter einen Bypassablauf für das Unfiltrat auf, so dass Unfiltrat über den Bypassablauf aus dem Unfiltratraum im oberen Bereich abgezogen wird und später erneut über den Einlauf dem Filterkessel zugeführt wird. Diese Bypassströmung bringt mit sich, dass die mittlere Strömungsgeschwindigkeit nach oben hin zwar durch die Filtratabfuhr durch die Kerzen abnimmt, der Wert jedoch nicht Null erreicht bzw. die Sedimentationsgeschwindigkeit des Filterhilfsmittels nicht unterschritten wird. Durch die Bypassströmung kann die Verschnittmenge weiter reduziert werden und eine wirkungsvolle Anschwemmung der Anschwemmschicht auf die Filterkerzen ermöglicht werden.

Es ist vorteilhaft, wenn der Anschwemmfilter einen Registerablauf aufweist. Wenn ein Registerablauf verwendet wird, stößt die Unfiltratströmung nicht mehr gegen die obere Lochplatte, was wiederum zu einer gleichmäßigeren Strömung des Unfiltrats führt.

Nachfolgend wir die Erfindung anhand der folgenden Figuren näher erläutert:
Fig. 1 zeigt perspektivisch einen teilweise aufgerissenen Anschwemmfilter gemäß der vorliegenden Erfindung,
Fig. 2 zeigt schematisch einen Querschnitt des erfindungsgemäßen Anschwemmfilters in vereinfachter Form beim Medienwechsel,
Fig. 3a zeigt schematisch einen Längsschnitt durch den erfindungsgemäßen Einlaufverteiler,
Fig. 3b zeigt einen Schnitt entlang der Linie I - I in Fig. 3a,
Fig. 4a und 4b zeigen die beiden Teller des in Fig. 3a dargestellten Einlaufverteilers im Längsschnitt,
Fig. 5a und 5b zeigen einen Rohrbogen mit Strömungsgleichrichter,
Fig. 6a und 6b zeigen schematisch einen Rohrbogen mit Gleichrichterblechen,
Fig. 7 zeigt einen Anschwemmfilter gemäß dem Stand der Technik.

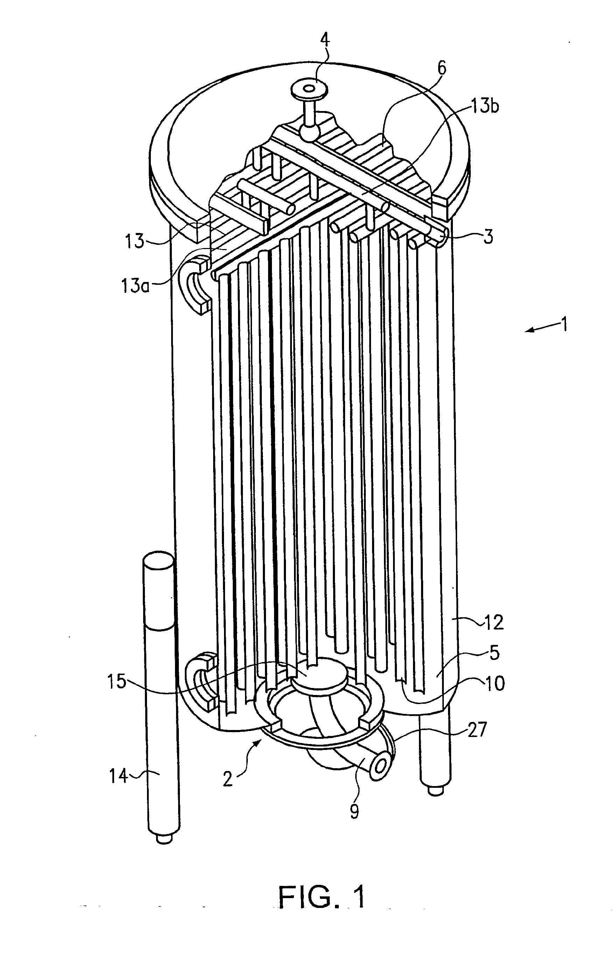

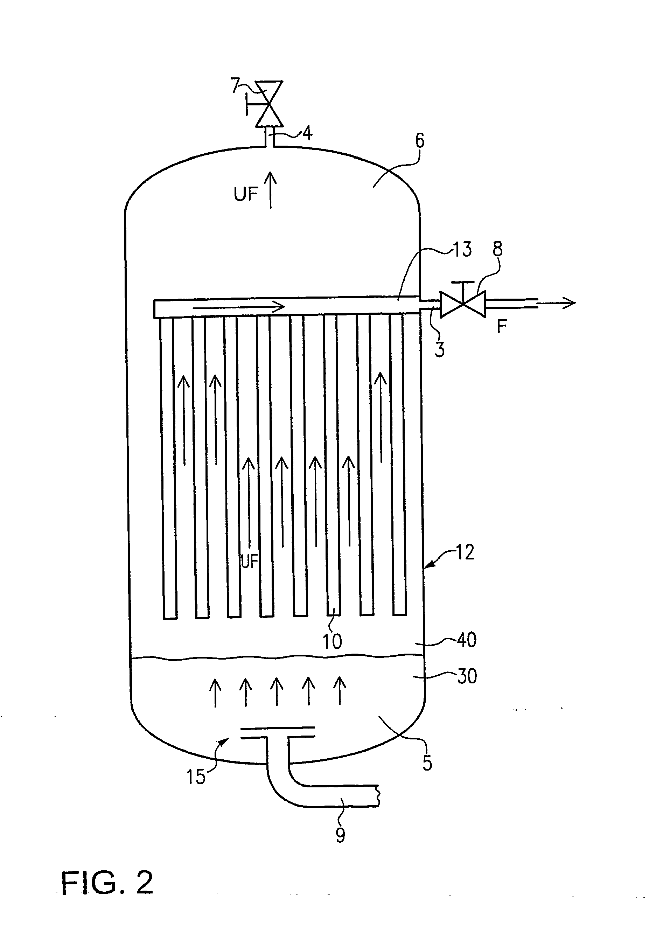

Die Fig. 1 zeigt perspektivisch den teilweise aufgerissenen erfindungsgemäßen Anschwemmfilter 1. Der Anschwemmfilter weist einen Filterkessel 12 auf, der hier auf den Füßen 14 steht. Der Filterklessel 12 weist einen Zulauf 2 für Unfiltrat, z. B. Bier, dem Filterhilfsmittel zugesetzt wurde, auf. Der Zulauf ist mengenmäßig über ein nicht dargestelltes Stellventil oder über eine nicht dargestellte Pumpe regulierbar. Der Filterkessel 12 umfasst einen Unfiltratraum 5, in dem sich mehrere Filterkerzen 10 vertikal erstrecken. Desweiteren ist ein Ablauf 4 für Unfiltrat mit einem Stellventil 7 (Fig. 2) vorgesehen, wodurch ein Teil des Unfiltrats aus dem Filterkessel 12 ausgeleitet werden kann, um so eine gezielte Unfiltratströmung zur besseren Anschwemmung des Unfiltrats an die Filterkerzen 10 zu erzielen. Das Unfiltrat, das über den Ablauf 4 abgeführt wurde, kann über eine nicht dargestellte Bypassleitung erneut dem Unfiltratraum 5, z. B. über den Zulauf 2 zugeführt werden.

Der hier gezeigte Anschwemmfilter weist einen Registerablauf 13 auf. Das heißt, es wird nicht die herkömmliche Lochplatte zur Befestigung der Filterkerzen verwendet, sondern die Filterkerzen münden in Rohrleitungen und werden dann zumindest einem Ablauf für das Filtrat zugeführt. Bei dem in Fig. 1 gezeigten Ausführungsbeispiel münden die Filterkerzen hier in erste Rohrleitungen 13a und werden von diesen getragen. Die Filterkerzen 10 sind gleichmäßig über den Querschnitt des Filterkessels 12 verteilt angeordnet. Die Rohrleitungen 13a liegen in einer Ebene senkrecht zu den Filterkerzen 10 parallel zueinander und sind seitlich verschlossen. Oberhalb der Rohrleitungen 13a erstrecken sich zwei weitere Rohrleitungen 13b, die mit nicht dargestellten Abläufen 3 verbunden sind, wobei das Filtrat durch die Filterkerzen in die ersten Rohrleitungen 13a und über die Rohrleitungen 13b zu den Abläufen läuft. Die Rohrleitungen 13 werden über Träger an den Kesselwänden befestigt.

Der Filtereinlauf 2 ist am unteren Ende des Unfiltratraums 5 unterhalb der Filterkerzen 10 angeordnet und weist ein Zulaufrohr 9 auf, an das sich der Einlaufverteiler 15 anschließt. Nach dem unterhalb des Filterkessels für Zuführleitungen kein Platz ist, muss das Unfiltrat seitlich zugeführt werden, weswegen das Zulaufrohr 9 gekrümmt ist und mindestens einen Rohrbogen aufweist. Der Anschwemmfilter 1 weist darüberhinaus einen Filterkesselablass 27, zum Ablassen der Flüssigkeit aus dem Filterkessel 12 auf.

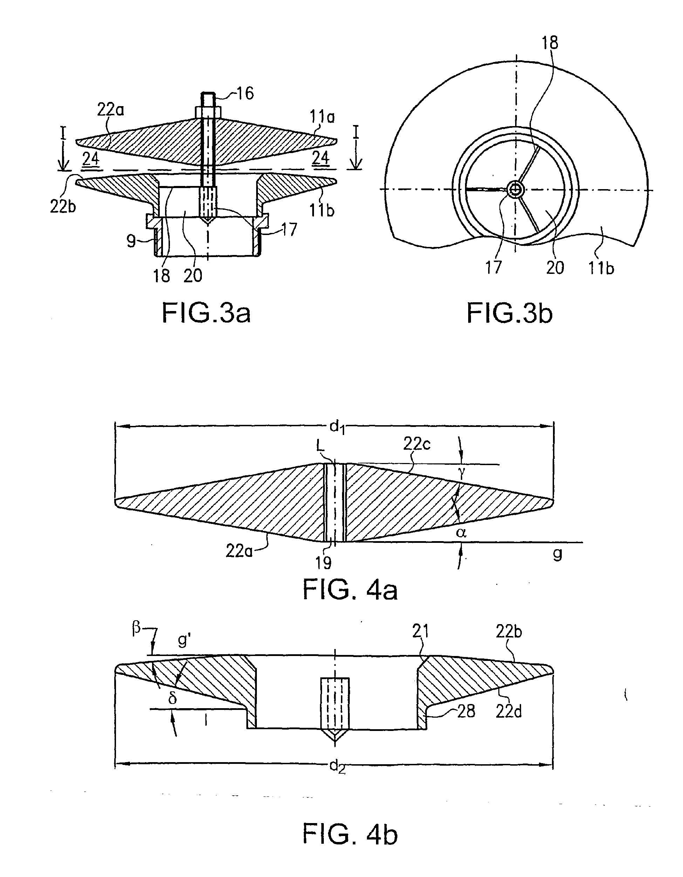

Der Einlaufverteiler 15 ist in den Fig. 3a, b und 4 näher gezeigt. Der Einlaufverteiler 15 ist in diesem Ausführungsbeispiel aus zwei Tellern 11 a und 11 b gebildet. Der Teller 11a ist diskusförmig und weist in seiner Mitte eine Bohrung 19 auf (Fig. 4). Der Durchmesser d1 des oberen Tellers 11a wird so gewählt, daß die Austrittsgeschwindigkeit kleiner 1 m/s beträgt. Der Winkel zwischen der Unterseite 22a des Tellers 11a und einer Geraden g senkrecht zur Längsachse L des Tellers 11a beträgt hier etwa 10°. Die Außenfläche 22c des ersten Tellers 11 a fällt von der mittleren Längsachse L, z. B. um einen Winkel γ = 10° ab.

Der untere Teller 11 b weist eine zylindrische Öffnung 20 auf, durch die das Unfiltrat aus dem Zulaufrohr 9 in den Ringspalt 24 laufen kann. Über Stege 18 wird eine Hülse 17 in der Öffnung 20 gehalten. Der Durchmesser d2 des zweiten Tellers 11 b liegt ebenfalls in einem Bereich ,daß die Austrittsgeschwindigkeit kleiner 1 m/s beträgt. Die Oberseite 22b des unteres Tellers 11 b fällt z. B. unter einem Winkel β = 5° von einer Geraden g' senkrecht zur Längsachse des Tellers 11 b ab. Die untere Fläche 22d des Tellers 11 b steigt unter einem Winkel von 15° zu einer Geraden I senkrecht zur mittleren Längsachse L des Tellers 11 b an, z. B. unter einen Winkel β = 15°. Der Teller 11 b weist weiter ein hohlzylindrisches Endstück 28 auf, das dazu dient, mit dem Zulaufrohr 9 verbunden zu werden. Die zylindrische Öffnung 20 weist an ihrem oberen Ende mindestens eine Phase 21 auf oder ist ganz zur Oberfläche 22b des Tellers hin abgerundet. Die Phase 21 bildet z. B. einen Winkel von 45° zu einer Geraden senkrecht zur Längsachse der Teller 11. An die Phase 21 schließt sich eine weitere Phase an, die zu einer Geraden senkrecht zur Längsachse L ein Winkel von 5° bildet. Der Teller 11 a und Teller 11 b werden über einen Stift 16, der durch die Bohrung 19 geführt wird und in der Hülse 17 befestigt wird, zusammengefügt. Über einen nicht näher erläuterten Spindelmechanismus kann der Abstand der Teller 11a und 11 b eingestellt und an einen bestimmten Prozess angepasst werden. Durch das Zusammenfügen der Teller 11a und 11 b entsteht der umlaufende Ringspalt 24 (Fig. 3a), der sich stetig nach außen hin erweitert. Der Öffnungswinkel (α+ β) des Ringspalts 24 ergibt sich aus dem Winkel α unter dem die Unterseite 22a des oberen Tellers 11a ansteigt und dem Winkel β unter welchen die Oberfläche 22b des unteren Tellers 11 b abfällt, wobei α > β.

Wenn zur Filtration Unfiltrat in den Filterkessel 12 einlaufen soll, so läuft dieses über das Zulaufrohr 9 in die Öffnung 20 des unteren Tellers 11 b des Einlaufverteilers 15. Von dort aus wird der Unfiltratstrom über den Ringspalt 24 in die Horizontale umgeleitet. Der Einlaufverteiler 15 bewirkt hier eine Reduzierung der lokalen Einlaufgeschwindigkeit im Unfiltratbereich des Filters.

Wie aus Fig. 2 hervorgeht, die im Wesentlichen der Fig. 1 entspricht, wobei jedoch der Registerablauf 13 vereinfacht dargestellt wurde, kann dann das Unfiltrat sehr gleichmäßig die Filterkerzen 10 anströmen. Ein Teil des Unfiltratstroms gelangt durch die Filterkerzen 10 in den Registerablauf 13 und wird als Filtrat abgeführt. Bei dem Registerablauf werden die Filterkerzen über Rohrsysteme zusammengefasst und separat abgeführt. Die Ablaufmenge kann z. B. über das Stellventil oder Regelklappe 8 eingestellt werden. Ein anderer Teil des Unfiltrats wird über den Ablauf 4 aus dem Unfiltratraum 5 abgeleitet, um eine definierte Unfiltratströmung zu erzeugen, wie durch die Pfeile dargestellt ist.

Fig. 2 zeigt den Zustand des Anschwemmfilters während eines Mediumwechsels. Dabei wird ein Vormedium 40 durch ein Nachmedium 30 ausgeschoben. Durch den Ringspalt 24 im Einlaufverteiler 15 wird eine ringförmige Diffusorwirkung auf die Unfiltratströmung bewirkt. Durch die Umlenkung der Strömung in die Horizontale wird der Stoßimpuls beim Einströmen des Nachmediums 30 in den Filterkessel 12 auf ein Minimum reduziert.

Somit wird nahezu ideale "Kolbenströmung" des Mediums im Filterkessel erzeugt, und eine ideale Verdrängung des Vormediums 40 bei geringster Vermischung möglich. Die Vermischung die erfolgt, ist lediglich diffusionsbedingt. Somit kann die Verschnittmenge beim Medienwechsel erheblich reduziert werden.

Da, wie bereits erwähnt, der Anschwemmfilter auf den Füßen 14 steht, ist unterhalb des Anschwemmfilters 1 kein Platz für Zuführleitungen. Aus diesem Grund weist der Anschwemmfilter 1 einen seitlichen Einlauf 2 auf, wobei das Zulaufrohr 9 mindestens einen Rohrbogen aufweist. Auf Grund der Rohrbögen kommt es doch zu einer Verschiebung des Geschwindigkeitsprofils der Strömung im Rohrbogen, so dass eine rotationssymetrische Strömung im Behälter problematisch ist. Aus diesem Grund ist der Einsatz von Strömungsgleichrichtern notwendig.

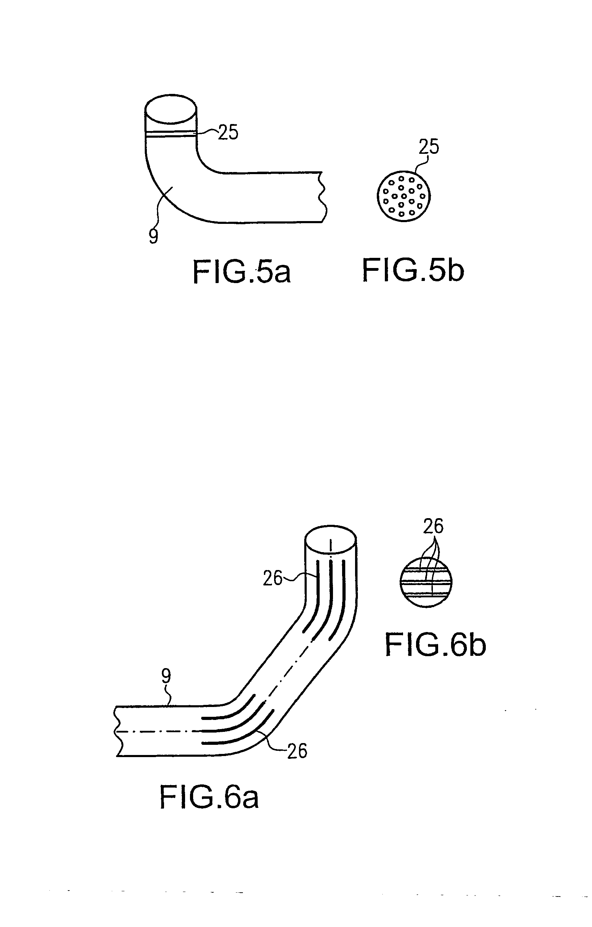

Eine Möglichkeit ist, nach dem Rohrbogen eine ausreichend lange vertikale Beruhigungsstrecke vor dem Einlaufverteilter 15 anzuordnen, was beispielsweise in Form eines geraden Rohres erfolgen kann. Eine weitere Maßnahme ist der Einbau eines Strömungsgleichrichters 25 zwischen Rohrbogen und Einlaufverteiler 15. Der Strömungsgleichrichter kann beispielsweise eine Lochplatte 25, wie in Fig. 5b gezeigt, sein. Eine weitere Maßnahme ist, Gleichrichterbleche 26 in dem oder den Rohrbögen vor dem Einlaufverteiler 15 anzuordnen, wie beispielsweise in Fig. 6a und 6b gezeigt wird. Die zuvor gezeigten Maßnahmen ermöglichen, dass das Geschwindigkeitsprofil der Strömung in der Rohrleitung wieder den Normalzustand einnimmt. Somit ist eine rotationssymetrische Strömung im Filterkessel 12 möglich, obwohl der seitliche Einlauf die gekrümmte Zulaufrohre erfordert.

## Patentansprüche

1. Anschwemmfilter (1) zur Filtration von Fluiden, insbesonderes von Bier, umfassend:
einen Filterkessel (12), einen Filtereinlauf (2) mit einem Zulaufrohr (9) zum Zuführen von Unfiltrat und Filterhilfsmittel, an das sich ein Einlaufverteiler (15) anschließt, mehrere in einem Unfiltratraum (5) des Filterkessels angeordnete Filterkerzen (10) und einen Filtratablauf (3), wobei der Einlaufverteiler (15) an seiner Unterseite eine Öffnung (20) als Einlass für das Unfiltrat aufweist **dadurch gekennzeichnet,**
**dass** der Einlaufverteiler (15) als Auslass für das Unfiltrat einen seitlich umlaufenden, sich in Richtung der seitlichen Filterkesselwand stetig erweiternden Ringspalt (24) aufweist, so dass das Unfiltrat in Horizontalrichtung zur seitlichen Filterkesselwand hin umlenkbar ist.

2. Anschwemmfilter nach Anspruch 1, **dadurch gekennzeichnet, dass** der Einlaufverteiler (15) aus zwei Tellern (11a, b) gebildet ist, die derart ausgebildet und zusammengefügt sind, dass dazwischen der umlaufende Ringspalt entsteht.

3. Anschwemmfilter nach Anspruch 1 oder 2, **dadurch gekennzeichnet, dass** der Öffnungswinkel (α+ β) des Ringspalts (24) zwischen 10° und 30° liegt und vorzugsweise 15° beträgt.

4. Anschwemmfilter nach mindestens einem der Ansprüche 1 bis 3, **dadurch gekennzeichnet, dass** der Abstand zwischen den beiden Tellern (11a, b) verstellbar ist.

5. Anschwemmfilter nach mindestens einem der Ansprüche 1 bis 4, **dadurch gekennzeichnet, dass** das Zulaufrohr (9) mindestens einen Rohrbogen aufweist.

6. Anschwemmfilter nach Anspruch 5, **dadurch gekennzeichnet, dass** nach dem Rohrbogen ein gerades Rohr als Beruhigungsstrecke angeordnet ist.

7. Anschwemmfilter nach Anspruch 5, **dadurch gekennzeichnet, dass** unmittelbar vor dem Einlaufverteiler (15), in dem Zulaufrohr (9) ein Strömungsgleichrichter (25) angeordnet ist.

8. Anschwemmfilter nach Anspruch 5, **dadurch gekennzeichnet, dass** in dem mindestens einem Rohrbogen des Zulaufrohrs (9) Gleichrichterbleche (26) angeordnet sind.

9. Anschwemmfilter nach mindestens einem der Ansprüche 1 bis 8, **dadurch gekennzeichnet, dass** der Anschwemmfilter (1) einen Bypassablauf (4) für das Unfiltrat aufweist.

10. Anschwemmfilter nach mindestens einem der vorhergehenden Ansprüche, **dadurch gekennzeichnet, dass** der Anschwemmfilter (1) einen Registerablauf (3) für das Filtrat aufweist.

11. Verwendung eines Einlaufverteilers (15) in einem Filterkessel (12), wobei der Einlaufverteiler (15) an seiner Unterseite eine Öffnung (20) als Einlass aufweist **dadurch gekennzeichnet dass** der Einlaufverteiler (15) als Auslass einen seitlich umlaufenden sich stetig nach außen erweiternden Ringspalt (24) aufweist so dass ein Unfiltrat in Horizontalrichtung zur seitlichen Filterkesselwand leitbar ist.

## Claims

1. Precoat filter (1) for the filtration of fluids, in particular beer, comprising:
a filtering tank (12), a filter inflow (2) with an inflow pipe (9) for the supply of unfiltrate and filter aids, which is followed by an inflow distributor (15), a plurality of filter cartridges (10) arranged in an unfiltrate space (5) of the filtering tank, and a filtrate outflow (3), the inflow distributor (15) having on its underside an orifice (20) as an inlet for the unfiltrate, **characterized in that** the inflow distributor (15) has as an outlet for the unfiltrate a laterally circumferential annular gap (24) widening continuously in the direction of the lateral filtering tank wall, so that the unfiltrate can be deflected in the horizontal direction towards the lateral filtering tank wall.

2. Precoat filter according to Claim 1, **characterized in that** the inflow distributor (15) is formed from two plates (11a, b) which are designed and assembled in such a way that the circumferential annular gap occurs between them.

3. Precoat filter according to Claim 1 or 2, **characterized in that** the opening angle (α + β) of the annular gap (24) is between 10° and 30° and preferably amounts to 15°.

4. Precoat filter according to at least one of Claims 1 to 3, **characterized in that** the distance between the two plates (11a, b) is adjustable.

5. Precoat filter according to at least one of Claims 1 to 4, **characterized in that** the inflow pipe (9) has at least one pipe bend.

6. Precoat filter according to Claim 5, **characterized in that** a straight pipe is arranged downstream of the pipe bend as a steadying zone.

7. Precoat filter according to Claim 5, **characterized in that** a flow straightener (25) is arranged, directly upstream of the inflow distributor (15), in the inflow pipe (9).

8. Precoat filter according to Claim 5, **characterized in that** straightener sheets (26) are arranged in the at least one pipe bend of the inflow pipe (9).

9. Precoat filter according to at least one of Claims 1 to 8, **characterized in that** the precoat filter (1) has a bypass outflow (4) for the unfiltrate.

10. Precoat filter according to at least one of the preceding claims, **characterized in that** the precoat filter (1) has a register outflow (3) for the filtrate.

11. Use of an inflow distributor (15) in a filtering tank (12), the inflow distributor (15) having on its underside an orifice (20), **characterized in that** the inflow distributor (15) has as an outlet a laterally circumferential annular gap (24) widening continuously outwards, so that an unfiltrate can be conducted in the horizontal direction to the lateral filtering tank wall.

## Revendications

1. Filtre à précouche (1) pour la filtration de fluides, en particulier de bière, comprenant :
une cuve de filtration (12), une entrée de filtre (2) avec un tube d'admission (9) pour l'arrivée de non-filtrat et d'auxiliaires de filtration, auquel se raccorde un distributeur d'entrée (15), plusieurs bougies filtrantes (10) disposées dans un espace de non-filtrat (5) de la cuve de filtration et une évacuation de filtrat (3), le distributeur d'entrée (15) présentant sur son côté inférieur une ouverture (20) en tant qu'admission pour le non-filtrat, **caractérisé en ce que** le distributeur d'entrée (15) présente en tant que sortie pour le non-filtrat une fente annulaire (24) périphérique latérale, qui s'élargit en continu en direction de la paroi latérale de la cuve de filtration, de sorte que le non-filtrat peut être renvoyé dans la direction horizontale en direction de la paroi latérale de la cuve de filtration.

2. Filtre à précouche suivant la revendication 1, **caractérisé en ce que** le distributeur d'entrée (15) est formé de deux disques (11a, b), qui sont configurés et assemblés de telle sorte qu'il en résulte la fente annulaire périphérique intercalaire.

3. Filtre à précouche suivant l'une des revendications 1 et 2, **caractérisé en ce que** l'angle d'ouverture (α + β) de la fente annulaire (24) se situe entre 10° et 30° et est de préférence de 15°.

4. Filtre à précouche suivant l'une au moins des revendications 1 à 3, **caractérisé en ce que** l'écartement entre les deux disques (11a, b) est réglable.

5. Filtre à précouche suivant l'une au moins des revendications 1 à 4, **caractérisé en ce que** le tube d'admission (9) comporte au moins un coude.

6. Filtre à précouche suivant la revendication 5, **caractérisé en ce qu'**un tube rectiligne est disposé en aval du coude en tant que section de stabilisation.

7. Filtre à précouche suivant la revendication 5, **caractérisé en ce qu'**un tranquilliseur (25) est disposé dans le tube d'admission (9) directement en amont du distributeur d'entrée (15).

8. Filtre à précouche suivant la revendication 5, **caractérisé en ce que** des tôles stabilisatrices d'écoulement (26) sont disposées dans le au moins coude du tube d'admission (9).

9. Filtre à précouche suivant l'une au moins des revendications 1 à 8, **caractérisé en ce que** le filtre à précouche (1) présente un bipasse d'évacuation (4) pour le non-filtrat.

10. Filtre à précouche suivant l'une au moins des revendications précédentes, **caractérisé en ce que** le filtre à précouche (1) présente un registre d'évacuation (3) pour le filtrat.

11. Utilisation d'un distributeur d'entrée (15) dans une cuve de filtration (12), le distributeur d'entrée (15) présentant sur son côté inférieur une ouverture (20) en tant qu'admission, **caractérisé en ce que** le distributeur d'entrée (15) présente en tant que sortie une fente annulaire (24) périphérique latérale qui s'élargit en continu en direction de l'extérieur, de sorte qu'un non-filtrat peut être dirigé dans la direction horizontale en direction de la paroi latérale de la cuve de filtration.
